# EUROPEAN PATENT APPLICATION

(11) **EP 1 104 084 A2**
(43) Date of publication of application: **30.05.2001**
(21) Application number: 00309911.6
(22) Date of filing: 08.11.2000
(51) Int. Cl.: H02M 7/08

(54) **Efficient parallel connection of improved power-supplies**

(30) Priority: 25.11.1999 IL 13313399
(71) Applicant: Drenkrum Limited, Petach-Tikva 49133 (IL)
(72) Inventor: Keisar Pavel, 17000 Nazareth-llit (IL)
(74) Representative: Rees, Alexander Ellison

(57) **Abstract**

A method for connecting in parallel of one or more switching power supplies via a common output power bus. Each switching power-supply has an input stage, connected to the primary winding of a transformer, and an output stage, connected to the secondary winding of the transformer and to the power bus, The output stage comprises a first and a second controllable main switches with low on-state impedance, for synchronous current rectification in the output stage. The control input of each of the controllable main switches is controlled by a corresponding auxiliary controllable switch connected between a contact of the secondary winding of the transformer and the control input of the main switch, thereby enabling the control of the auxiliary controllable switches by signals induced in the secondary winding by the primary winding, and thereby disconnecting the control input of each of the main switches from the output power bus.

## Description

### Field of the Invention

The present invention relates to the field of switching power supplies. More particularly, the invention relates to a method and apparatus for efficient parallel connection of power supplies employing synchronous rectifiers as output stages sharing power delivery to a common power bus.

### Background of the Invention

Switching power supplies are widely used to provide electric power to Direct Current (DC) energy consuming devices. Such type of power supplies is required, since they operate with relatively high efficiency. The power-supply converts a higher DC voltage, for example, 48 Volts, into lower voltages, typically between 2.5 and 5 Volts, mostly required for digital circuitry. Switching technology is used to efficiently convert the high voltage energy into low voltage energy, with maximum available current. The high voltage is pulse modulated at a relatively high frequency (typically 100 to 300 KHz) and inserted into a primary side of a transformer. The secondary side of the transformer is connected to a secondary circuit that employs a rectifier (for example, a pair of diodes in typical forward topology) and a low-pass-filter for high switching frequency ripple reduction. In many secondary circuits, the rectifier diodes in the secondary circuit are replaced by transistors, such as power Metal Oxide Semiconductor Field Effect Transistors (MOSFETs) to obtain a lower voltage drop during the conduction ("on") state. Such secondary circuit (an output stage) is called synchronous rectifier (where each transistor's conduction period is synchronized with a conduction period of the original diode).

In some applications, such as telecommunication, computer network, databases management systems etc., the power should be continuously supplied to important power consuming circuits, otherwise information and/or data connection can be lost. Therefore, high reliability of the supply system should be provided. Improved reliability is obtained by connecting several power supplies in parallel to the same output bus to share the low voltage energy, supplied to the fed system, but from separate input power sources, so as to provide immunity of the power system against input power failures. Each power-supply contributes a relative portion to the total consumed energy at the power bus. In the event of a failure at a certain power-supply or its input line, the remaining power supplies provide the missing energy to the bus. However, employing a synchronous rectifying stage may cause serious problems in several abnormal operation states, such as during a so-called "hot-swap" or a shutdown process of one of the power supplies in a parallel system. Usually, applying the DC voltage to the output of the non-operating power supply, which employs self-driven synchronous rectifying techniques, causes its synchronous transistors to be switched "on" permanently, thereby introducing an effective short-circuit over the output power bus. The described scenario may occur during a "hot" insertion (into the output bus which is already connected to another, normally operating, one or more power supplies) or at the non-operating power supply being in a shut-down state but still connected to the shared power bus. In this case, rectifier transistors, output conductors and connectors may be overheated, and even be irreversibly damaged. Another problem occurs when such an output stage enters into self-oscillation state due to the power stage failure, causing energy circulation resulting in high ripple riding over the common output voltage, as well as high power losses in the oscillating power supply.

A known prior art technique for solving these problems is to connect an additional power FET switch in series with the load to disconnect the secondary circuit from the load, at the states described above. However, this solution causes a constant power loss across this serial FET even if it is in its full saturation with a minimal resistance value. For example, an improved FET reflects an ohmic resistance of 6 mΩ, which dissipates 2.4 Watts at 20 Ampere current. If the output voltage is 2.5 Volts, the power dissipation is about 5% of the total supplied power, and therefore unacceptable.

Other methods involve a more advanced secondary circuit for controlling the synchronous rectifying transistors. However, this secondary circuit is costly and very complex due to a required timing accuracy of the control signals. Moreover, employing such advanced secondary circuits usually deteriorates the soft-switching effect, which is a desirable feature. Soft switching, inherently introduced by a self-driven synchronous rectifier, allows smoother and more effective power transition from "off' to "on" states in the FET. During this transition, a body diode of the transistor or an external diode, connected to the FET starts to conduct and allows the transistor to be switched on when the voltage across it is close to zero (also known as "Zero Voltage Switching").

US Patent 5,818,704 discloses a synchronizing/driving circuit for a forward synchronous rectifier of a switching power converter. The converter comprises an output inductor, a first transistor coupled in series with the output inductor, a second transistor coupled in shunt with the output inductor, and a control circuit which senses the voltage across the output inductor, and in response alternately biases the first and second transistors on and off. However, this control circuit does not eliminate power dissipation over the first and second transistors when the power-supply is not operated and connected to an energy carrying power-bus.

US Patent 5,856,712 discloses a method for providing an uninterruptible power-supply to a load, both at ordinary times and in an emergency. An AC input power is modulated into a higher frequency AC power and the latter is fed into the primary winding of a transformer. The higher frequency AC power induced in the secondary winding of the transformer is demodulated and supplied to the load. The higher frequency AC power induced in the tertiary winding of the transformer is rectified into DC power, which charges a battery. In an emergency, DC power from the battery is converted into a higher frequency AC power and applied to the tertiary winding. The higher frequency AC power induced in the secondary winding is averaged, thereby producing AC output power which is supplied to the load. However, this power-supply circuit does not eliminate power dissipation over the transistors employed by the circuit connected to the secondary winding, when the power-supply is not operated and connected to an energy carrying power-bus.

All the methods described above have not yet provided satisfactory solutions to the problem of minimizing power losses, and for increasing the reliability of power supplies employing a synchronous rectifier, which are connected in parallel with a power bus.

It is an object of the present invention to provide an improved switching power supply employing a synchronous rectifier, suitable for being connected in parallel to a power bus with similar power supplies, which overcomes the drawbacks of prior art.

It is another object of the present invention to provide a method and apparatus for minimizing power losses and for increasing the reliability of power supplies employing a synchronous rectifier, connected in parallel to a power bus, that eliminate overheating of the active components.

It is a further object of the present invention to provide a method and apparatus for minimizing power losses and for increasing the reliability of power supplies employing a synchronous rectifier, connected in parallel to a power bus, that eliminate unwanted oscillations.

It is still another object of the present invention to provide a method and apparatus for minimizing power losses and for increasing the reliability of power supplies employing a synchronous rectifier, connected in parallel to a power bus, that minimizes power losses during shutdown state and enables soft-switching.

Other objects and advantages of the invention will become apparent as the description proceeds.

### Summary of the Invention

The present invention is directed to a method for minimizing power losses and for increasing the reliability of a switching power-supply, connected in parallel to one or more power supplies via a common output power bus. The switching power-supply comprises an input stage, connected to the primary winding of a transformer, and an output stage, connected to the secondary winding of the transformer and to the power bus. The output stage comprises a first and a second controllable main switches with low on-state impedance, for synchronous current rectification in the output stage. The control input of each of the controllable main switches is controlled by a corresponding auxiliary controllable switch connected between a contact of the secondary winding of the transformer and the control input of the main switch. The auxiliary controllable switches are controlled by signals induced in the secondary winding by the primary winding, thereby disconnecting the control input of each of the main switches from the output power bus. Preferably, an additional (discharge) switch is connected in parallel with the primary winding of the transformer. The discharge switch is caused to conduct whenever the power-supply is shut-down, for discharging energy accumulated in the transformer, and thereafter is returned to its non-conducting state. The voltage supplied to the primary winding of the transformer may be a pulse-modulated voltage. Any of the auxiliary controllable switches and the discharge switch may be a transistor (for example, a FET), a relay or an optical switching device.

By using the term "switching power supply" it is meant to include any power supply in which voltages are switched to control the output voltage. The term "power bus" indicates a power line which is common to the output of more than one power supply.

The invention is also directed to an apparatus for minimizing power losses and for increasing the reliability of a switching power-supply, connected in parallel to one or more power supplies via a common output power bus, which comprises:
a) a transformer having a primary and a secondary winding, connected, respectively, to the input and the output stages of the power-supply, for isolating between the input and the output stages;
b) a first and a second controllable main switches with low on-state impedance, for synchronous current rectification in the output stage;
c) a first controllable auxiliary switch for controlling the control input of the first controllable main switch, the first controllable auxiliary switch connecting between a contact of the secondary winding and the control input of the first controllable main switch, the control input of the first controllable auxiliary switch being connected to the other contact of the secondary winding; and
d) a second controllable auxiliary switch for controlling the control input of the second controllable main switch, the second controllable auxiliary switch connecting between the other contact of the secondary winding and the control input of the second controllable main switch, the control input of the second controllable auxiliary switch being connected to the contact of the secondary winding.

Preferably, the apparatus further comprises:
e) a discharge switch connected in parallel with the primary winding of the transformer;
f) circuitry for detecting a failure signal or an external shut-down (e.g., software) for shutting-down the power source;
g) circuitry for disconnecting the input stage from any external power source; and
h) circuitry for causing the discharge switch to conduct whenever the power device is shut-down, for discharging stored energy.

The invention is further directed to a switching power-supply, having minimizing power losses and improved reliability, which comprises:
a) an input stage and an output stage;
b) a transformer having a primary and a secondary winding, connected, respectively, to the input and output stages, for isolating between the stages;
c) a detector circuitry for detecting a failure or an external shut-down command to enter a shut-down state; and
d) a control circuitry, coupled to the input and output stages, for activating/disactivating the switching power-supply, for controlling the modulation of the input voltage to the power-supply, and for effectively shortening the primary winding whenever a shut-down state is entered.

Preferably, the input stage comprises:
a) a controllable activation switch connected in series with a contact of the input voltage to the power-supply, for activating/disactivating the power-supply in response to a signal from the control circuitry;
b) a modulator, controlled by the control circuitry, for modulating the input voltage; and
c) a discharge switch connected in parallel with the primary winding of the transformer, for effectively shortening the primary winding in response to a signal from the control circuitry.

Preferably, the output stage comprises:
a) an output filter connected between the output of the synchronized rectifier and the power bus;
b) a first controllable main switch connected between the contact and the more negative output contact, for synchronizing the current rectification in the output stage of the power supply;
c) a second controllable main switch, connected between the other contact of the secondary winding and the more negative output contact, for synchronizing the current rectification in the output stage of the power supply;
d) a first controllable auxiliary switch for controlling the control input of the first controllable main switch, the first controllable auxiliary switch being connected between the other contact of the secondary winding and the control input of the first switch; and
e) a second controllable auxiliary switch for controlling the control input of the second controllable main switch, the second controllable auxiliary switch being connected between the contact of the secondary winding and the control input of the second main switch.

The output filter may comprise:
a) an inductor, connected in series between a contact of the secondary winding and the more positive output contact; and
b) a capacitor connected in parallel with the output contacts;

The invention also provides an improved switching power supply suitable for being connected in parallel with one or more power supplies via a common output power bus, which comprises:
a) a transformer having a primary and a secondary winding, connected, respectively, to the input and the output stages of said power-supply, for isolating between said input and the output stages;
b) a first and a second controllable main switches with low on-state impedance, for synchronous current rectification in the output stage of said output stage;
c) a first controllable auxiliary switch for controlling the control input of said first controllable main switch, said first controllable auxiliary switch connecting between a contact of said secondary winding and the control input of said first controllable main switch, the control input of said first controllable auxiliary switch being connected to the other contact of said secondary winding; and
d) a second controllable auxiliary switch for controlling the control input of said second controllable main switch, said second controllable auxiliary switch connecting between said other contact of said secondary winding and the control input of said second controllable main switch, the control input of said second controllable auxiliary switch being connected to said contact of said secondary winding.

### Brief Description of the Drawings

The above and other characteristics and advantages of the invention will be better understood through the following illustrative and non-limitative detailed description of preferred embodiments thereof, with reference to the appended drawings, wherein:
- Fig. 1 schematically illustrates a prior art structure of the output stage of a switching power-supply, employing synchronous rectification in its secondary circuit;
- Fig. 2 schematically illustrates an improved structure of the output stage of a switching power-supply, employing synchronous rectification in its secondary circuit, according to a preferred embodiment of the invention; and
- Fig. 3 schematically illustrates an improved structure of a switching power-supply, employing synchronous rectification in its secondary circuit, according to a preferred embodiment of the invention.

### Detailed Description of Preferred Embodiments

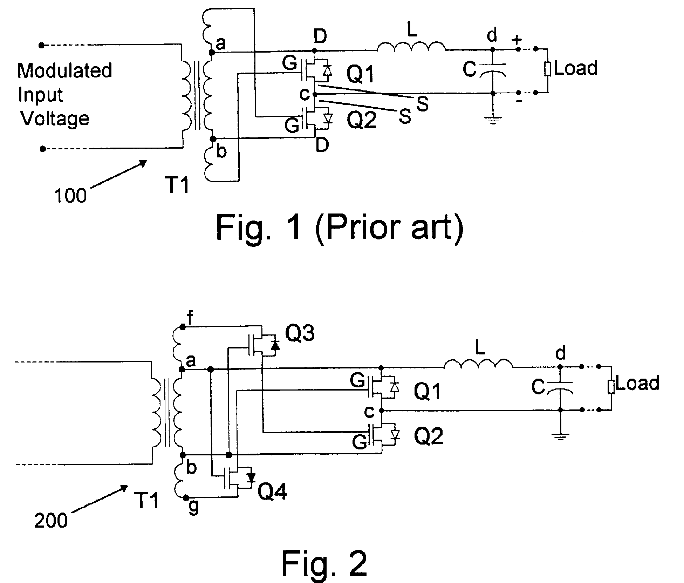

Fig. 1 schematically illustrates a prior art structure of the output stage of a switching power-supply 100, employing synchronous rectification in its secondary circuit. In this example, a pulse width modulated (PWM) voltage is applied to the primary winding of a transformer T1. An inductor L is connected in series with one port a of the secondary winding of the transformer T1. The drain of an N-channel MOSFET Q1 is also connected to point a of the secondary winding of the transformer T1. The drain of another N-channel MOSFET Q2 is connected to the other point **b** of the secondary winding of the transformer T1. The sources of each MOSFET are connected together at point **c**, which represents the negative contact of the output to the load. The positive contact of the output to the load is taken from the other contact of the inductor L, represented by the point d. A smoothing capacitor C is connected across the load output, between the points c and d.

The modulated input voltage applied to the primary winding induces an AC voltage across the secondary winding. During the positive half of the cycle of the induced AC voltage, current flows from point a through the inductor L into the load, and back to point b trough Q2, which is conducting. During the positive half period, Q1 is not conducting. During the negative half of the cycle of the induced AC voltage, Q2 is not conducting and Q1 is conducting. During the negative half period, the output stage is actually disconnected from the secondary winding, and the output inductor L which accumulated energy during the positive half period, functions as a current source and maintains the current flow from point d through the load and Q1, back to the inductor.

Assuming that the output of the power-supply 100 is connected to a power bus in parallel with other power supplies. When the power-supply 100 is not operating, the other connected power supplies apply voltage to the common power bus between point **d** and **c**. Such a situation may occur in two modes:

**Mode 1:** The non-operating power-supply is connected to the active ("live") parallel supply system. This mode includes both an event when a new power supply has just been inserted, and a case when a power supply remains connected after being shut-down for a time period which is sufficiently long to terminate transition processes.

In this mode, the voltage applied by the power bus between the points **d** and **c** switches both Q1 and Q2 to the conducting state (due to a short-circuit formed by the secondary winding of transformer), which start dissipating power. The unwanted dissipated power is determined by the output voltage and by the current supply capability of the power supply system. Therefore, power is lost from the bus. In addition, under some conditions, the unwanted dissipated power is too high and Q1 and Q2 are overheated and may be even permanently damaged.

**Mode 2:** The operating power-supply has been shut-down for some reason (e.g., due to a failure or software command).

In this mode, after shut-down, the energy stored in the transformer T1 and in the output inductor L remains, and may cause the self-driven synchronous rectifier to oscillate. Self-oscillation conditions are caused by resonance circuits formed by the circuit capacitance and inductance of the power-supply 100. These oscillations cause unwanted power losses, and induce ripple over the power bus voltage. In this case, Q1 and Q2 conduct intermittently and dissipate power. Similar to Mode 1, power is lost from the bus and Q1 and Q2 may be overheated and permanently damaged.

Fig. 2 schematically illustrates an improved structure of the output stage of a switching power-supply 200, employing synchronous rectification in its secondary circuit, according to a preferred embodiment of the invention. The switching power-supply 200 comprises two p-channel MOSFETs, Q3 and Q4 which are added to the secondary circuit of the power-supply 100 (of Fig. 1 above) to control the driving signals supplied to the gate of Q2 and Q1, respectively. The FETs Q3 and Q4 are controlled only by the primary circuit voltage, and therefore, the conduction and the cut-off states of Q1 and Q2 are no longer determined by the externally applied voltage to the output bus. If the primary circuit does not function, the gate and the source of each FET Q3 and Q4 are short-circuited by the secondary winding of the transformer T1. The gate of Q2 is connected to point **f** trough Q3, rather than directly (as in prior art connection). The gate of Q3 is controlled by the voltage between point **b** and point **f**. The gate of Q1 is connected to point **g** trough Q4, rather than directly (as in prior art connection). The gate of Q4 is controlled by the voltage between points **a** and **g**. If the primary winding operates normally, the secondary stage operates normally as well. Using this structure, Q1 and Q2 conduct only when there are driving signals that are induced in the secondary winding of the transformer T1, by the primary winding (i.e., only when the power-supply 200 is operated). This structure eliminates the unwanted power losses and the overheating of Q1 and Q2 in Mode 1. Since Q3 and Q4 are used only for controlling Q2 and Q1, the current flowing through each one of them is neglectable, and therefore, the power dissipation over them is very low, so their cost is low.

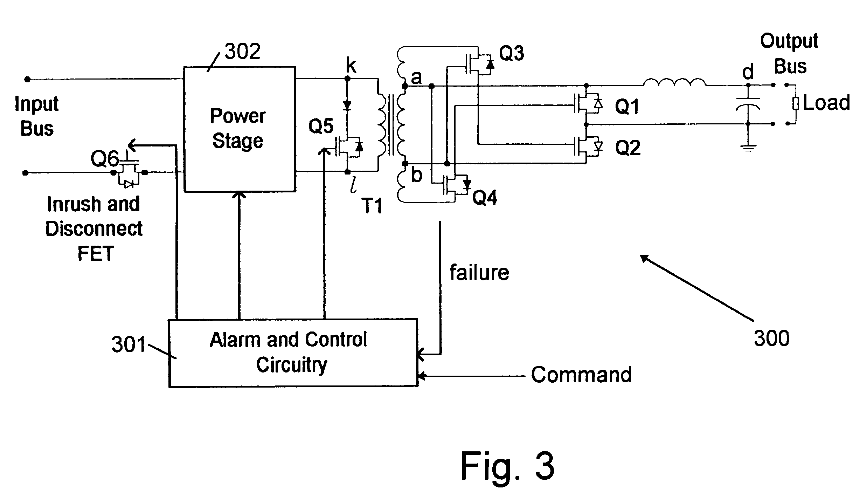

Fig. 3 schematically illustrates an improved structure of a switching power-supply 300, employing synchronous rectification in its secondary circuit, according to a preferred embodiment of the invention. A MOSFET Q5 is added to the primary circuit of the power-supply 200 (of Fig. 2 above), and is connected between the points **k** and **l**, in parallel with the primary winding of the transformer T1. Upon shut-down of the power supply 300 due to a failure or a corresponding command, a control signal is supplied by an Alarm and Control Circuitry 301 to the gate of Q5 and drives it to conduct. Oscillations may occur when the power supply is suddenly shut-down. Such shut-down state may result either from a failure in the secondary circuit, or in response to a software command.

As a result, the primary winding of the transformer T1 is effectively shortened, the energy stored in T1 is discharged, and oscillations, if any will be stopped. Simultaneously, or a bit earlier, unit 301 outputs another control signal and disconnects the power supply from the input source by controlling the switch Q6. Q5 is driven into conduction for relatively short duration, which is sufficient for energy discharge. If Q5 implemented using a FET, it should be connected in series with a rectifier diode. Therefore, whenever the power-supply 300, after being in Mode 2,is switched into mode 1 by activating Q5. Before the power supply is re-activated, it is protected by Q3 and Q4, as explained hereinbefore.

The input stage of the power-supply 300 (circuitry connected to the primary winding of the transformer T1) is controlled by an alarm and control circuitry 301, which is connected to both the input and the output stages of the power-supply 300. The alarm and control circuitry 301 is used either for detecting failures in the output stage or of a shut-down command, and for controlling the switch Q6 of the input voltage and switch Q5 (if Q5 is a FET then a rectifier diode is added to enable circuit discharge). When Q6 is activated, the power supply 300 is activated, while receiving appropriate control signals to the power stage. The power-supply 300 is activated whenever Q6 is conducting. The power stage 302, contained in the primary circuit, is used to modulate the input voltage (for example, one of the well-known topologies is controlled by using Pulse Width Modulation [PWM]).

The above examples and description have of course been provided only for the purpose of illustration, and are not intended to limit the invention in any way. As will be appreciated by the skilled person, the invention can be carried out in a great variety of ways, employing more than one technique from those described above, such as using a FET or a relay or an optical switching device, rather than using a transistor for switching signals, all without exceeding the scope of the invention.

## Claims

1. A method for connecting in parallel of one or more power supplies via a common output power bus, comprising:
a) providing a switching power-supply having an input stage, connected to the primary winding of a transformer, and an output stage, connected to the secondary winding of said transformer and to said power bus, said output stage comprising a first and a second controllable main switches with low on-state impedance, for synchronous current rectification in said output stage; and
b) controlling the control input of each of said controllable main switches by a corresponding auxiliary controllable switch connected between a contact of the secondary winding of said transformer and the control input of said main switch, thereby enabling the control of said auxiliary controllable switches by signals induced in said secondary winding by said primary winding, and thereby disconnecting the control input of each of said main switches from said output power bus.

2. A method according to claim 1, further comprising:
c) connecting a discharge switch in parallel with the primary winding of the transformer;
d) causing said discharge switch to conduct whenever the power-supply is shut-down, for discharging energy accumulated in said transformer; and
e) returning said discharge switch to its non-conducting state.

3. A method according to claim 1, wherein the voltage supplied to the primary winding of the transformer is a pulse modulated voltage.

4. A method according to claim 1 or 2, wherein the main switch is a field-effect transistor (a FET).

5. A method according to claim 1 or 2, wherein the auxiliary controllable switch and the discharge switch is selected from the following group:
- a transistor;
- a relay;
- an optical switching device.

6. Apparatus for minimizing power losses and for increasing the reliability of a switching power-supply, connected in parallel to one or more power supplies via a common output power bus, comprising:
a) a transformer having a primary and a secondary winding, connected, respectively, to the input and the output stages of said power-supply, for isolating between said input and the output stages;
b) a first and a second controllable main switches with low on-state impedance, for synchronous current rectification in the output stage of said output stage;
c) a first controllable auxiliary switch for controlling the control input of said first controllable main switch, said first controllable auxiliary switch connecting between a contact of said secondary winding and the control input of said first controllable main switch, the control input of said first controllable auxiliary switch being connected to the other contact of said secondary winding; and
d) a second controllable auxiliary switch for controlling the control input of said second controllable main switch, said second controllable auxiliary switch connecting between said other contact of said secondary winding and the control input of said second controllable main switch, the control input of said second controllable auxiliary switch being connected to said contact of said secondary winding.

7. Apparatus according to claim 6, further comprising:
e) an discharge controllable switch connected in parallel with the primary winding of the transformer;
f) circuitry for detecting a failure signal or an external shut-down command and for shutting down the power source;
g) circuitry for disconnecting the input stage from any external power source; and
h) circuitry for causing said discharge controllable switch to conduct whenever the power source is shut-down for discharging stored energy.

8. Apparatus according to claim 6 or 7, wherein the main controllable switch is a FET.

9. Apparatus according to claim 6, 7, or 8, wherein the auxiliary controllable switch is selected from the following group:
- a transistor;
- a relay;
- an optical switching device.

10. A switching power-supply, having minimized power losses and improved reliability, comprising:
a) an input stage and an output stage;
b) a transformer having a primary and a secondary winding, connected, respectively, to said input and output stages, for isolating between said stages;
c) a detector circuitry for detecting an external shutdown command or a failure signal, to shut down the power source; and
d) a control circuitry, coupled to said input and output stages, for activating/disactivating said switching power-supply, for controlling the modulation of the input voltage to said power-supply, and for effectively shortening said primary winding whenever the power source is shut-down.

11. A switching power-supply according to claim 10, wherein the input stage comprises:
a) a discharge switch connected in parallel with the primary winding of the transformer, for effectively shortening said primary winding in response to a signal from the control circuitry;
b) a controllable activation switch connected in series with a contact of the input voltage to the power-supply, for activating/disactivating said power-supply in response to a signal from the control circuitry; and
c) a modulator, controlled by said control circuitry, for modulating said input voltage.

12. A switching power-supply according to claim 11, wherein the output stage comprises:
a) an output filter connected between the output of the synchronized rectifier and the power bus;
b) a first controllable main switch connected between the contact and the more negative output contact, for synchronizing the current rectification in the output stage of the power supply;
c) a second controllable main switch, connected between the other contact of the secondary winding and the more negative output contact, for synchronizing the current rectification in the output stage of the power supply;
d) a first controllable auxiliary switch for controlling the control input of the first controllable main switch, the first controllable auxiliary switch being connected between the other contact of the secondary winding and the control input of the first switch; and
e) a second controllable auxiliary switch for controlling the control input of the second controllable main switch, the second controllable auxiliary switch being connected between the contact of the secondary winding and the control input of the second main switch.

13. A switching power-supply according to claim 11, wherein the output filter comprises:
a) an inductor, connected in series between a contact of the secondary winding and the more positive output contact; and
b) a capacitor connected in parallel with the output contacts

14. A switching power-supply according to claims 10 to 12, wherein the main switch is a FET.

15. A switching power-supply according to claim 11 or 12, wherein the auxiliary controllable switch and the discharge switch are selected from the following group:
- a transistor;
- a relay;
- an optical switching device.

16. A switching power-supply according to claim 10, wherein the input stage comprises:
a) a controllable activation switch connected in series with a contact of the input voltage to the power-supply, for activating/disactivating said power-supply in response to a signal from the control circuitry; and
b) a modulator, controlled by said control circuitry, for modulating said input voltage.

17. An improved switching power supply suitable for being connected in parallel with one or more power supplies via a common output power bus, comprising:
a) a transformer having a primary and a secondary winding, connected, respectively, to the input and the output stages of said power-supply, for isolating between said input and the output stages;
b) a first and a second controllable main switches with low on-state impedance, for synchronous current rectification in the output stage of said output stage;
c) a first controllable auxiliary switch for controlling the control input of said first controllable main switch, said first controllable auxiliary switch connecting between a contact of said secondary winding and the control input of said first controllable main switch, the control input of said first controllable auxiliary switch being connected to the other contact of said secondary winding; and
d) a second controllable auxiliary switch for controlling the control input of said second controllable main switch, said second controllable auxiliary switch connecting between said other contact of said secondary winding and the control input of said second controllable main switch, the control input of said second controllable auxiliary switch being connected to said contact of said secondary winding.
